# EUROPEAN PATENT APPLICATION

(11) **EP 2 500 075 A1**
(43) Date of publication of application: **19.09.2012**
(21) Application number: 10830068.2
(22) Date of filing: 15.11.2010
(51) Int. Cl.: B01D 29/07, A47J 31/06, B01D 17/022, B01D 39/16, G01N 19/00

(54) **TUBULAR LIQUID-TREATING FILTER, METHOD FOR CAPTURING AND REMOVING OIL CONTENT IN LIQUID, METHOD FOR PRODUCING BEVERAGE LIQUID, AND METHOD FOR MEASURING OIL GRAM LIFE OF TUBULAR FILTER**

(30) Priority: 13.11.2009 JP 2009259541
(71) Applicant: 3M Innovative Properties Company, Saint Paul, MN 55133-3427 (US)
(72) Inventor: DOI Azusa, Sagamihara-shi Kanagawa 229-1133 (JP); YAMAGUCHI Hiroaki, Sagamihara-shi Kanagawa 229-1133 (JP); ISHII Satoshi, Sagamihara-shi Kanagawa 229-1133 (JP); KOMATSU Moriyuki, Kitaibaraki-shi Ibaraki 319-1725 (JP)
(74) Representative: Vossius & Partner
(86) International application number: PCT/JP2010/070647
(87) International publication number: WO 2011/059116

(57) **Abstract**

A tubular filter suitable for capturing and removing, in a continuous production line, solid content and oil content in a large volume of liquid (particularly a beverage liquid). A tubular liquid-treating filter formed by winding a nonwoven fabric layer together with a reinforcing net sheet, wherein the reinforcing net sheet has a mesh size in the range from 6 to 35 mesh and includes a portion having a thickness in the range from 0.3 to 2.0 mm.

## Description

### BACKGROUND

### Technical Field

The present invention relates to a tubular liquid-treating filter, a method for treating a beverage liquid, a method for producing a beverage liquid, and a method for measuring the oil gram life of a tubular filter.

### Related Art

Tubular filters for capturing and removing solid content in liquids are known. For example, Japanese Unexamined Utility Model Application Publication No. H01-170417 discloses a filter obtained by continuously winding a coarse net under tension as a support on a porous core while feeding a nonwoven fabric having an average fiber diameter and average pore diameter that are different from those of the net onto the net that forms the support and winding without applying tension to the nonwoven fabric.

PCT (WO) 2004-500229 discloses a tubular filter for removing contaminants from a liquid or gas, wherein the filter is provided with alternating layers of a filter medium (a nonwoven fabric layer) and a diffusion medium (a net) and at least one layer of the filter medium is provided with bypass pores.

Japanese Unexamined Patent Application Publication No. H03-229606 discloses a filter (a bag) for a coffee beverage liquid, wherein it is possible to adsorb both oil content and solid coffee content in the coffee liquid by using a nonwoven fabric that satisfies a prescribed relational expression as a filter material.

Patent Document 1: Japanese Unexamined Utility Model Application Publication No. H01-170417
Patent Document 2: PCT (WO) 2004-500229
Patent Document 3: Japanese Unexamined Patent Application Publication No. H03-229606

### Disclosure of the Invention

### Problems to be Solved by the Invention

However, conventional tubular filters can satisfactorily capture and remove solid content in a liquid, but are not thought to effectively capture and remove oil content in a liquid. Meanwhile, bag type coffee filters treat several cups of coffee and are therefore not suitable for treating large volumes of liquids on industrial production lines.

An objective of the present invention is to provide a tubular filter suitable for capturing and removing, in a continuous production line, solid content and oil content (including oil content in a beverage liquid) in a large volume of liquid (particularly a beverage liquid).

### SUMMARY

In order to achieve the above-mentioned objectives, the present invention provides:
(a) a tubular liquid-treating filter formed by winding a nonwoven fabric layer together with a reinforcing net sheet, wherein the reinforcing net sheet includes a net portion that exhibits oil content capturing properties through an interaction with the nonwoven fabric layer, as a first aspect of the present disclosure;

(b) a tubular liquid-treating filter formed by winding a nonwoven fabric layer together with a reinforcing net sheet, wherein the reinforcing net sheet has a mesh size in a range from 6 to 35 mesh and includes a portion having a thickness in a range from 0.3 to 2.0 mm, as a second aspect of the present disclosure;

(c) a tubular liquid-treating filter formed by winding a nonwoven fabric layer with a reinforcing net sheet, wherein the filter also has a small net sheet piece that exhibits oil content capturing properties through an interaction with the nonwoven fabric layer, as a third aspect of the present disclosure;

(d) a tubular liquid-treating filter formed by winding a nonwoven fabric layer with a reinforcing net sheet, wherein the filter also has a small net sheet piece and the small net sheet piece has a mesh size in a range from 6 to 35 mesh and a thickness in a range from 0.3 to 2.0 mm, as a fourth aspect of the present disclosure;

(e) the tubular liquid-treating filter as described in any one of the aforementioned (a) to (d), wherein an area of overlap between the nonwoven fabric layer and either the net portion having oil content capturing properties in the net sheet or the net sheet portion having a mesh size in a range from 6 to 35 mesh and a thickness in a range from 0.3 to 2.0 mm is not less than 1 cm² and not more than a total area of the nonwoven fabric layer, as a fifth aspect of the present disclosure;

(f) the tubular liquid-treating filter as described in any one of the aforementioned (a) to (e), wherein an oil gram life of the filter, as measured with a filter evaluation method using hexane extraction of oil content in a liquid, is such that an evaluation value measured 40 minutes after a start of treatment is not more than 50% lower than an evaluation value at the start of treatment, as a sixth aspect of the present disclosure;

(g) the tubular liquid-treating filter as described in any one of the aforementioned (a) to (f), wherein the tubular liquid-treating filter is a tubular beverage liquid-treating filter, as a seventh aspect of the present disclosure;

(h) a method for capturing and removing oil content in a liquid by using a tubular filter as described in any one of the aforementioned (a) to (g) as an eighth aspect of the present disclosure;

(i) a method for producing a beverage liquid by using a tubular filter as described in any one of the aforementioned (a) to (g), as a ninth aspect of the present disclosure;

(j) a method for measuring an oil gram life of a tubular filter as described in any one of the aforementioned (a) to (g) by using a hexane extraction process, as a tenth aspect of the present disclosure.

### Effect of the Invention

The tubular filter according to the present disclosure is a tubular liquid-treating filter formed by winding a nonwoven fabric layer together with a reinforcing net sheet, wherein the reinforcing net sheet includes a net portion that exhibits oil content capturing properties through an interaction with the nonwoven fabric layer, and therefore 1) can capture and remove solid content in a liquid mainly through the nonwoven fabric layer and 2) can effectively capture and remove oil content mainly through an interaction between the nonwoven fabric layer and the net portion that exhibits oil content capturing properties when filtering a liquid, and also exhibits satisfactory filtration capacity. Therefore, the tubular filter according to the present disclosure can effectively filter solid content and oil content in a liquid for treatment of a large volume of liquid.

In addition, with the tubular filter according to the present disclosure, because means for capturing and removing oil content are now clear, in addition to means for removing solid content as are already conventionally established, it is possible to adjust the "oil content" in a filtered liquid within a desired range by selecting and combining the constituent components of the tubular filter. As a result, it is now possible to adjust the "taste and flavor" of a beverage liquid (such as coffee, an alcoholic beverage, or the like).

### BRIEF DESCRIPTION OF THE DRAWING(S)

FIG. 1 is a perspective view of an embodiment of the tubular filter of the present disclosure.
FIG. 2 is a longitudinal sectional view of the tubular filter shown in FIG. 1, in the direction indicated by the arrows (I), FIG. 2A is a transverse sectional view of a tubular filter of a type 1, and FIG. 2B is a transverse sectional view of a tubular filter of a type 2.
FIG. 3 is a perspective view, a part of which is a cross section, showing a laminated body of a net sheet and a nonwoven fabric layer, which has captured oil content.
FIG. 4 is a cross-sectional view of the laminated body of a net sheet and a nonwoven fabric layer shown in FIG. 3, in the direction indicated by the arrows (II).
FIG. 5 is a process diagram showing a part of a process for producing a main body of the tubular filter of the type 1.
FIG. 6 is a process diagram showing a part of a process for producing a main body of the tubular filter of the type 2.
FIG. 7 is a schematic view showing the constitution of a coffee beverage liquid production apparatus used to produce the beverage liquid of the present disclosure.

### List of reference numbers

100: Tubular filter
10: Filter main body
12: Nonwoven fabric layer
14: Reinforcing net sheet (article having oil content capturing properties)
15: Reinforcing net sheet (may, or may not, have oil content capturing properties)
16: Small net sheet piece having oil content capturing properties
60: Porous core member
70 and 72: Sealing member
80: Hollow portion
141: Net-forming yarn
145: Oil content deposit
201 and 202: Raw material tank
203: Mixing tank
204: Primary pulverizer
205: Secondary pulverizer
206: Holding tank
207: Separating device
208: Re-extraction tank
209: Extracted gas
210: Extracted product

### DETAILED DESCRIPTION

Embodiments of the present disclosure will now be explained in greater detail by referring to the appended drawings.

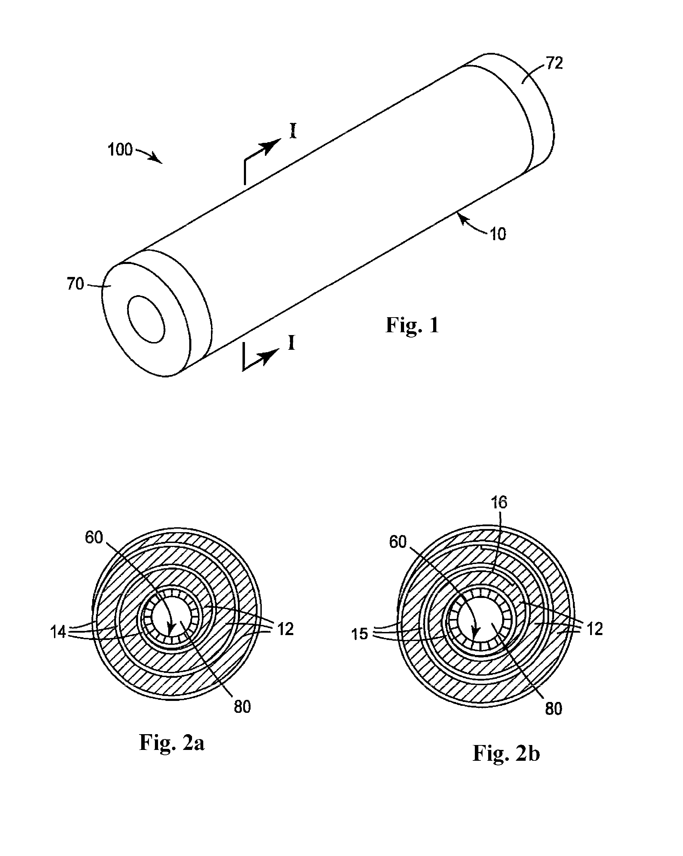

FIGS. 1 to 2 show embodiments of two types (type 1 and type 2) of the tubular filter according to the present disclosure. The two types of tubular filter (100) are each constituted from a filter main body (10), a porous core member (60) and sealing members (70 and 72). More specifically, as shown in FIGS. 1 to 2, the tubular filter is provided with a tubular main body (10) formed from an appropriate combination of tubular nonwoven fabric layers (12) wound in the form of "spirals" and net sheets (14, 15, and 16) disposed on the outer periphery and inner periphery of these nonwoven fabric layers and between the nonwoven fabric layers, wherein, if necessary, the porous core member (60) having a porous tubular wall is disposed at the center of the filter main body (10) and a hollow portion (80) that extends in the axial direction is formed on the inner side of the tubular filter.

Furthermore, the tubular filter (100) is provided with a pair of the sealing members (70 and 72) which are fixedly disposed at each end, in the axial direction, of the filter main body (10) formed from the nonwoven fabric layers and net sheets. The sealing members (70 and 72) are plate-like members having an aperture in the center of the member, and are fixed at each end, in the axial direction, of the filter main body by means of bonding, thermal adhesion, or the like. Moreover, as long as it is possible to maintain the external form of the filter main body, it is possible for the tubular filter not to have a porous core member.

With regard to the tubular filter of type 1 shown in FIG. 2A and the tubular filter of type 2 shown in FIG. 2B, the filter main body is formed from a nonwoven fabric layer (12) and a net sheet (14) that includes a net portion having good oil content capturing properties in the tubular filter of type 1. However, the tubular filter of type 2 differs from the tubular filter of type 1 by being formed from a first net sheet (15) (which may, or may not, have oil content capturing properties), a nonwoven fabric layer (12), and a second net sheet (16) that includes a net portion having oil content capturing properties. These two types are clearly different from each other in terms of production method, but production methods are mentioned in paragraphs [0039] to [0040].

Moreover, a number of layers of nonwoven fabric and net laminated in the tubular filter generally falls within a range from 1 to 30. This was decided by taking into account the product life of the filter product and compactness of the product.

It is possible to use an organic material or an inorganic material as the nonwoven fabric material of the nonwoven fabric layers in the filter according to the present disclosure, but in cases where the intended use of the filter is the treatment of a beverage liquid, it is preferable to use an organic material. Organic materials able to be used include (1) thermoplastic organic materials such as polyolefins such as polypropylene (PP) or polyethylene, thermoplastic polyamides such as nylonTM, polyesters, polyethersulfones, acrylic materials, polystyrene, poly(phenylene sulfide), fluororesins, thermoplastic polyurethane resins, ethylene-vinyl acetate copolymer resins, and polyacrylonitrile, (2) thermosetting organic materials such as polyurethanes, and (3) natural or semi-synthetic materials such as rayon, acetates, wood pulp, and cellulose. It is possible to produce a nonwoven fabric of an organic material by selecting an optimal material from among these materials according to the usage conditions and usage environment of the tubular filter and forming the fabric as single component fibers or composite fibers. Of these, materials mainly including a lipophilic thermally adhesive polyolefin such as polypropylene, polyethylene, and the like are preferred.

By winding the nonwoven fabric layer (12) made from an organic material mainly including thermally adhesive polyolefin into a tubular shape while applying a prescribed pressure and simultaneously heating the nonwoven fabric layer (12) to a sheet-forming temperature appropriate for the material in the filter main body (10), it is possible to thermally bond overlaying nonwoven fabrics together with the net and impart the required rigidity to the filter main body (10). Because a nonwoven fabric layer (12) having such characteristics varies in terms of average flow pore diameter, average thickness, and the like when heated to the sheet-forming temperature, it is preferable to predict the post-forming filtration precision and then select the material, dimensions, and the like of the nonwoven fabric.

A fiber diameter in the nonwoven fabric layer (12) is within a range from 0.1 to 100 µm, and is selected according to the use (usage conditions/usage environment) of the tubular filter (100).

For example, the nonwoven fabric layer (12) can be formed from a nonwoven fabric having an air permeability per unit area of, for example, not lower than 33 CFM/m² (3 CFM/ft²) and not higher than 6522 CFM/m² (600 CFM/ft²) or, for example, not lower than 54 CFM/m² (5 CFM/ft²) and not higher than 4565 CFM/m² (420 CFM/ft²). The nonwoven fabric layer can be formed as a material having an average thickness of from 0.3 to 5.0 mm when a pressure of 55 kPa is applied in the thickness direction.

Lamination of the nonwoven fabric layers (12) in the tubular filter is designed so that the average fiber diameter of the nonwoven fabric increases from the inner side to the outer side of the tubular filter and the pressure loss of the nonwoven fabric layers is reduced from the inner side to the outer side of the tubular filter (this type of design is known as a "gradient"). By constituting in this way it is possible to impart the filter with a longer product life without clogging by filtered materials occurring in a short period of time.

The net sheets in the filter according to the present disclosure can be formed as a mesh structure. A shape of the apertures in the mesh can be any type of rectangular lattice, such as a tetragonal lattice, an oblong lattice, a rhomboid lattice, or a polygonal lattice, but may also be a circular lattice, an elliptical lattice, or the like. Of these shapes, a tetragonal lattice mesh is generally used for reasons of convenience when producing the net and uniformity of filtration characteristics of the filter. In addition, the net sheets may be in any form such as a simple woven fabric or a form in which intersections between yarns are integrated by means of thermal adhesion or the like.

A material of yarn that forms the net in the filter according to the present disclosure can be the same material as that used for the nonwoven fabric material of the nonwoven fabric layers. Alternatively, it is possible to form the net from aramid fibers known as Kevlar™ or Nomex™.

"Net having oil content capturing properties" in the filter according to the present disclosure means a net in a case where a tubular filter provided with a net sheet laminated on a nonwoven fabric layer has a better oil content capturing and removing effect than a tubular filter provided only with a nonwoven fabric layer of the same material. Said net in the present disclosure specifically means a net having a mesh size in a range from 6 to 35 mesh and a thickness in a range from 0.3 to 2.0 mm, as described below.

Here, "mesh" of the net is a unit expressing the dimensions of the apertures in the net, and refers to a number of yarns spaced at equal intervals along each side of a tetragonal lattice in which the length of each side is 25.4 mm (1 inch). Therefore, the "mesh" has the following relationship with a pitch of the yarns that formed the net. Mesh = 25.4 mm ÷ pitch (mm)

In addition, the "thickness" of the net means a thickness of parts where the yarn that forms the mesh structure of the net intersects.

"Net not having oil content capturing properties" in the filter according to the present disclosure means a net in a case where a tubular filter provided with a net sheet laminated on a nonwoven fabric layer does not exhibit a remarkable oil content capturing and removing effect compared to a tubular filter provided only with a nonwoven fabric layer of the same material. Specifically, this means a net having a mesh size of 4 mesh or coarser.

"Net sheet including a net portion that exhibits oil content capturing properties through an interaction with the nonwoven fabric layer" in the present disclosure means a net sheet in which a portion of the net sheet is formed from the aforementioned "net having oil content capturing properties" and in which other portions of the net sheet are formed from "a net not having oil content capturing properties".

Specifically, the net sheet in the tubular filter of type 1 shown in FIG. 2A may be a net sheet in which the whole of the net sheet is formed from only a net portion that exhibits oil content capturing properties through an interaction with the nonwoven fabric layer, but may also be a net sheet in which only a part of the net sheet is formed from a net portion having oil content capturing properties.

Meanwhile, the net sheet in the tubular filter of type 2 shown in FIG. 2B may be a net sheet in which the whole of the first net sheet is a "net sheet not having oil content capturing properties" and the whole of the second net sheet is a net sheet formed from only a net portion that exhibits oil content capturing properties through an interaction with the nonwoven fabric layer, but may also be a net sheet in which only a part of the net sheet is formed from a net portion having oil content capturing properties.

The mesh size of the net having oil content capturing properties is different from that of the reinforcing net not having oil content capturing properties (or having extremely low capturing properties).

Conventionally, nets not having oil content capturing properties are mainly used in order to wind nonwoven fabric layers into spirals, and are nets which 1) have sufficient resistance to winding tension and 2) generally have large apertures coarser than 4 mesh, so that the ability of the filter main body (10) to filter solid content in beverage liquids is not affected by the use of the net. In order to prevent deformation of the filter main body caused by the pressure of the beverage liquid being treated in a filtration process as far as possible, the nonwoven fabric layer needs to be wound tightly on the porous core member, and the net is therefore produced using yarns having a tensile strength that ensures that the net is not easily broken by the tension applied in this type of winding process.

Moreover, there are examples of conventional tubular filters using nets having mesh sizes finer than 4 mesh, but in these cases, countermeasures were implemented by providing bypass pores in the nonwoven fabric layers of the filter main body, in order not to increase the filtration resistance of the filter to more than was necessary.

Meanwhile, the net having good oil content capturing properties in the present disclosure is one having apertures of a mesh size that is finer than that of the above-mentioned net. Specifically, the mesh size is from 6 to 35 mesh, preferably from 8 to 20 mesh, and more preferably from 10 to 15 mesh. The net having oil content capturing properties is preferably one that is suitable for filtering oil content in a liquid even if the net brings about a reduction in the filtration rate at the flow surface of the liquid being filtered and an increase in the filtration resistance at the pressure surface.

In addition, a net having fine apertures can be expressed as the following conversion formula based on an overall length of the yarn (141) that forms the net per unit area (25.4 mm²) of the net.

### Overall length of the yarn that forms the net = mesh number x 2 x 25.4 (mm)

In cases where, according to this conversion formula, the overall length of the yarn that forms the net is from 304.8 to 1778 mm, preferably from 406.4 to 1016 mm, and more preferably from 508 to 762 mm, a net having effective oil content capturing properties is obtained.

In addition, the thickness of the net is preferably from 0.3 to 2.0 mm. As explained below, the reasons for this thickness are that in an oil content capturing and removing process that uses an interaction between the nonwoven fabric layer and the net, sites at which oil content is deposited are present in sufficient number and the net per se has sufficient flexibility.

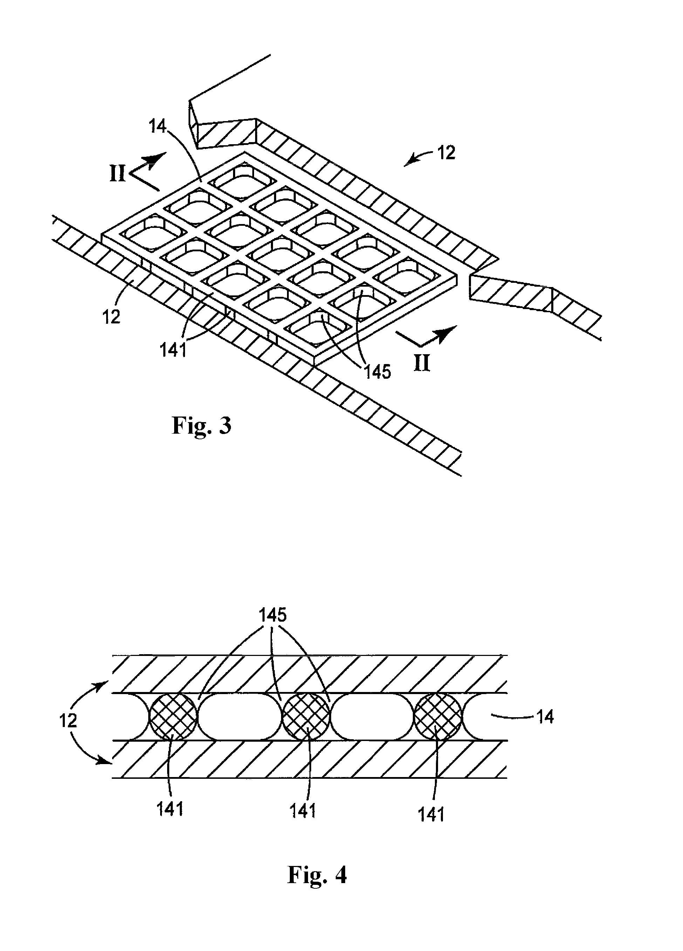

Here, the oil content capturing and removing process that uses "an interaction between the nonwoven fabric layer and the net" can be explained as follows, using FIG. 3, in terms of a relationship between oil content and the nonwoven fabric layer and the net that constitute the filter. However, the oil content capturing and removing process is not limited to this explanation.
1) In the filter, the liquid being filtered is introduced almost perpendicularly to the nonwoven fabric layer and passes through the nonwoven fabric layer in this state.
2) If the yarn (141) that forms the net having a fine mesh size is stretched around the nonwoven fabric layer, the flow speed of the liquid is reduced at the periphery of the yarn (141) that forms the net, and because the liquid tends to remain at the periphery where the surface of the nonwoven fabric layer and the yarn that forms the net are in close contact, aggregation of oil content readily occurs. As a result these aggregates are adsorbed by, or attached to, parts were the side surface of the yarn that forms the net (corresponding to the thickness of the net) comes into contact with the nonwoven fabric layer, as shown in FIG. 3 and FIG. 4, and this generates oil content deposits (145) and enables the oil content to be captured and removed.
3) Moreover, the oil content may be adsorbed, captured, and removed to a certain extent at the surface and in the inner part of the nonwoven fabric layer.

An area of overlap between the nonwoven fabric layer and the net having oil content capturing properties is a minimum area required for treatment, and is specifically 1 cm² or more, and preferably not less than an area of the secondary side of the tubular filter and not more than an area of the nonwoven fabric, and is decided according to a required degree of filtration. For example, in cases where a high degree of overlap is required between the nonwoven fabric layer and the net having oil content capturing properties, a filter in which the mesh size of the net is 6 mesh or higher, preferably 8 mesh or higher, and more preferably 10 mesh or higher, and in which a total area of contact between the nonwoven fabric layer and the net having oil content capturing properties is sufficiently large, is selected as a filter having good oil content capturing and removing performance. Here, the area of the secondary side means an area of the nonwoven fabric layer wound on the entire outer periphery of the porous core member.

Moreover, using a net having fine apertures reduces the particle removal life of the net and means that the filter is less able to withstand actual use. Therefore, a filter having a net mesh size of, for example, from 8 to 20 mesh is actually used as the filter according to the present disclosure.

A method for producing the tubular filter main body will now be explained.

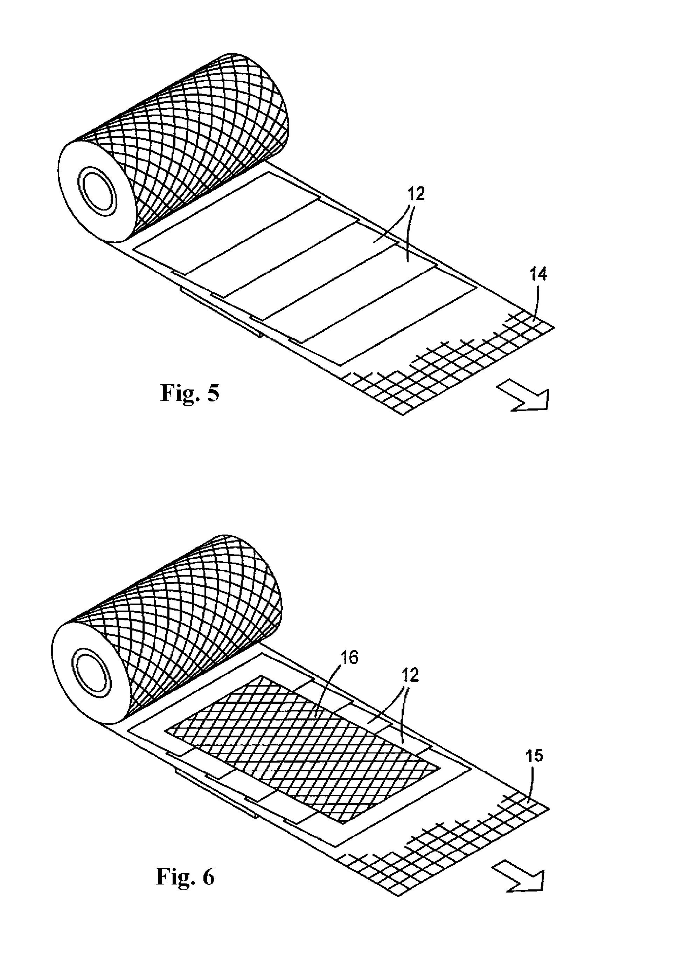

FIG. 5 shows a state in which a nonwoven fabric layer and a net for capturing oil content are laminated in the tubular filter main body of type 1, which is disclosed in paragraph [0039]. Firstly, 1) nonwoven fabric layers (12) are disposed on a net sheet (14) that includes a net portion having oil content capturing properties so that the nonwoven fabric layers (12) partially overlap in the longitudinal direction of the net sheet (14), as shown in FIG. 5. Next, 2) the laminate of these nonwoven fabric layers and the net is wound in the form of a spiral on a roll.

FIG. 6 shows a method for producing the tubular filter main body of type 2, which is disclosed in paragraph [0040]. 1) Nonwoven fabric layers (12) are disposed on a first net sheet (15) (which may be a net having oil content capturing properties or a net not having oil content capturing properties) so that the nonwoven fabric layers (12) either partially overlap in the longitudinal direction of the first net sheet (15) or do not overlap, and 2) a second net sheet (16) having oil content capturing properties is disposed on the net, and these net sheets and nonwoven fabric layers are lap wound in the form of a spiral, as shown in FIG. 6.

The tubular filter main body can be prepared as shown below by appropriately modifying the above-mentioned method for producing the filter main body (10).

For example, modes for producing a tubular filter main body include: a) lap winding a narrow "net having oil content capturing properties" on a "net not having oil content capturing properties", b) lap winding a nonwoven fabric layer with a net sheet alternately having a "net not having oil content capturing properties" and a "net having oil content capturing properties" and c) winding a "net not having oil content capturing properties" and then winding a "net having oil content capturing properties". In this way, it is possible to appropriately alter the degree of overlap between the nonwoven fabric layers and the net having oil content capturing properties and it is also possible to produce filters having a wide variety of oil content capturing characteristics.

An explanation will now be given of an example in which the tubular filter according to the present disclosure is used in a process for treating a large volume of a beverage liquid. Moreover, it goes without saying that the present disclosure is not limited to the treatment of beverage liquids, and can be used to remove a variety of oil content, and can be specifically used to treat liquids in order to remove oil content from water-based inks, water-based paints, water-based cosmetics, water-based denture stabilizers, waste water, and the like.

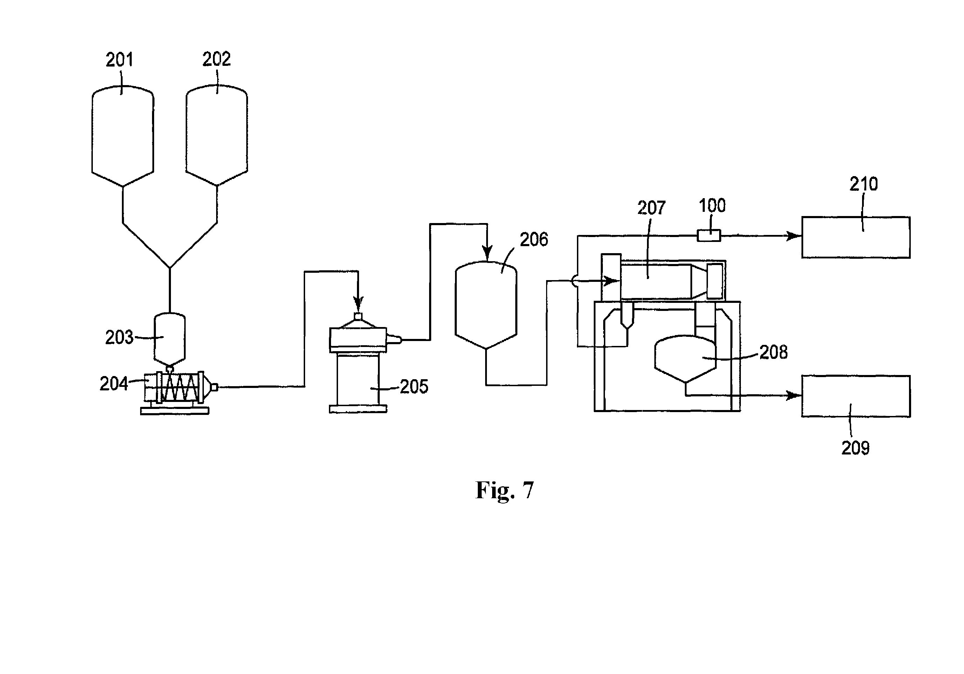

FIG. 7 shows an example of a coffee beverage production apparatus and line in which raw material coffee beans are used efficiently and a high concentration coffee extract can be obtained. This production apparatus and line includes 1) mixing raw materials from raw material tanks (201 and 202) in a mixing tank (203) and carrying out a first step (204) (a primary pulverizer) and (205) (a secondary pulverizer), in which pulverization is carried out in a state whereby roasted coffee beans and an extraction liquid are both present, and 2) carrying out a second step (206) (a holding tank), in which extraction is performed using said extraction liquid, and 3) carrying out a third step (207) (a separating device) and (208) (a re-extraction tank), in which the coffee been extraction residue and the extracted liquid are separated by means of centrifugal separation. In this production line, an extracted gas (209) is extracted from the re-extraction tank (208), and the tubular filter (100) according to the present disclosure is disposed, for example, in a position between the separating device (207) and a loading corner for an extracted product (210) in the final stage of the production line.

An explanation will now be given regarding selection of the filter used in the production apparatus and line.
(1) A plurality of filters having a variety of oil content capturing properties is prepared in advance.
(2) Next, the oil gram life of the various filters is measured using the method explained below, and the oil content filtering performance of the filters is graded.

Here, "oil gram life" is an indicator for evaluating an oil content capturing and removing performance of a filter, and a larger oil gram life value at the start of treatment (0 minutes) means good oil content capturing performance in terms of the quantity captured by the filter and means that the filter has high oil content capturing and removing performance. In addition, a case in which the oil gram life value 40 minutes after the start of treatment is not more than 50% lower than the value at the start of treatment means that the filter exhibits good retention of already captured oil content and that the filter has high oil content capturing and removing performance.

### (Procedure for Measuring Oil Gram Life)

A) A filter cartridge is immersed in an oil for a desired period of time.
B) The filter obtained in A) above is wrapped in netting and rotated by means of a stirring device so as to remove excess oil from the surface of the cartridge.
C) The filter obtained in B) above is placed in a housing, water is supplied to the primary side of the filter, and oil adsorbed by the filter is removed by treating with a desired quantity of water.
D) The water in the filter obtained in C) above is removed by drying the filter in an oven.
E) Hexane is added to the filter obtained in D) above, and oil content remaining in the filter is extracted using the hexane.
F) Sodium sulfate is added to the hexane extraction liquid obtained in E) above so as to completely capture and remove water remaining in the filter.
G) The mixture of hexane extraction liquid and sodium sulfate obtained in F) above is filtered using a 1 µm glass filter.
H) The hexane extraction liquid obtained in G) above is evaporated.
I) The weight of the oil content obtained in H) above is measured.
J) From the value obtained in I) above, the quantity of oil content adsorbed by, and remaining in, the filter cartridge when treated with the arbitrary quantity of water is obtained. This value is taken to be the oil gram life.
   (3) The taste (flavor) of the extracted product obtained following filtration in the production apparatus/line is confirmed, and if the taste is weak, the filter is replaced with one having a lower oil gram life value, but if the taste is intense, the filter is replaced with one having a higher oil gram life value.

### Working Examples

The present disclosure will now be explained in greater detail through the use of working examples. However, the present disclosure is not limited to the working examples given.

### (Experiment 1)

A variety of tubular liquid-treating filters were formed by winding a nonwoven fabric layer together with a reinforcing net sheet, wherein the reinforcing net sheet included a net portion that exhibits oil content capturing properties through an interaction with the nonwoven fabric layer, and the performance of these filters was evalated.

As Working Example 1-1, a net sheet (a polypropylene net sheet having a thickness of 0.8 mm and a mesh size of 12 mesh) was fixed by thermal adhesion on the outer side of a polypropylene porous core member having an internal diameter of 28 mm and an external diameter of 33 mm. The polypropylene nonwoven fabrics shown in Table 1 below were overlaid in order from no. 1 on the surface of the inner side, in the winding direction, of the net sheet, two sheets of each of nonwoven fabrics 4 to 8 shown in Table 1 were overlaid, the nonwoven fabrics were wound while applying tension to the net sheet, and the area of overlap between the nonwoven fabrics and the net sheet in this case was 4064 cm²/10 inches. Finally, the end parts of the net sheet were thermally bonded so as to produce a filter main body. Table 1 shows the pressure loss for each of the nonwoven fabric layers used in Working Example 1-1. In addition, Table 2 shows the filter production conditions and the filter evaluation results.

[Table 1]

**Table 1**

| Nonwoven fabric layer | Pressure loss (mmH₂O@32L/min) |
|---|---|
| 1 (Inner periphery) | 10.2 |
| 2 | 7.4 |
| 3 | 7.7 |
| 4 | 1.9 |
| 5 | 2.0 |
| 6 | 1.0 |
| 7 | 0.4 |
| 8 (Outer periphery) | 0.2 |

### 1. Filter evaluation details.

Filter evaluation (measurement of oil gram life) and particle capturing and removing performance evaluation were carried out as follows.
(1) Measurement of oil gram life
   1) Test conditions
      Oil: Salad oil
      Water: City water (filtered to 0.02 µm, 25°C)
      Flow rate: 1 L/min
   2) Test procedure:
      The filter main body was immersed in the oil. The filter was then placed in a housing, and water was supplied to the primary side of the filter so as to remove oil adsorbed by the filter After supplying an arbitrary quantity of treatment water, the filter was removed, water was removed by drying the filter in an oven, and oil remaining in the filter was extracted using hexane. The hexane was evaporated, the weight of oil content remaining was measured, and it was therefore possible to determine the quantity of oil content adsorbed by the filter when treated with the arbitrary of water. This value was taken to be the oil gram life.
      Next, the oil gram life retention rate was determined using the following formula. Retention rate (%) = measured initial (0 minutes) oil gram life value ÷ measured oil gram life value 40 minutes after the start of treatment × 100 (%)
(2) Particle capturing and removing performance
   1) Test conditions
Tests were conducted under the following conditions. Dispersion liquid: ISO TEST DAST 2. 0103-1, A2. FINE dispersion liquid (20 mg/L) Flow rate: 40 L/min
2) Test procedure:
   After passing the raw liquid through the filter for 5 minutes, the raw liquid and the filtrate were sampled and evaluated.

As Working Example 1-2, a filter main body was produced in the same manner as in Working Example 1, except that a net sheet having a thickness of 0.5 mm and a mesh size of 7.5 mesh was used as the net sheet and the area of overlap between the nonwoven fabric and the net sheet was 7112 cm²/10 inches. Table 2 shows the production conditions and the filter evaluation results.

As Working Example 1-3, a filter main body was produced in the same manner as in Working Example 1, except that a net sheet having a thickness of 0.5 mm and a mesh size of 6 mesh was used as the net sheet and the area of overlap between the nonwoven fabric and the net sheet was 7112 cm²/10 inches. Table 2 shows the production conditions and filter evaluation results for Working Example 1-3.

As Comparative Example 1-1, a filter main body was produced in the same manner as in Working Example 1, except that a net sheet having a thickness of 0.5 mm and a mesh size of 4 mesh was used as the net sheet and the area of overlap between the nonwoven fabric and the net sheet was 7112 cm²/10 inches. Table 2 shows the production conditions and filter evaluation results for Comparative Example 1-1.

The following matters were confirmed from the evaluation results in Table 2. If the mesh size is finer than 6 mesh and the area of overlap between the net and the nonwoven fabric layers is approximately 7000 cm²/10 inches or more, the oil gram life retention rate is 50% or higher. By adjusting the filter production conditions, it is possible to increase this retention rate to 90% or higher.

### (Experiment 2)

A variety of tubular liquid-treating filters were formed by winding a nonwoven fabric layer by means of a reinforcing net sheet, wherein the filter also had a small net sheet piece that exhibits oil content capturing properties through an interaction with the nonwoven fabric layer, and the performance of these filters was evaluated.

As Working Example 2-1, a reinforcing net sheet (a polypropylene net sheet having a thickness of 0.5 mm and a mesh size of 4 mesh) and a small net sheet piece (polypropylene net sheet having a thickness of 0.8 mm and a mesh size of 12 mesh, and the area of overlap between the net and the nonwoven fabric was 508 cm²/10 inches were fixed by thermal adhesion on the outer side of a polypropylene porous core member having an internal diameter of 28 mm and an external diameter of 33 mm. In this case, the polypropylene nonwoven fabrics shown in Table 1 below were overlaid in order from no. 1 on the surface of the inner side, in the winding direction, of the reinforcing net sheet, two sheets of each of nonwoven fabrics 4 to 8 shown in Table 1 were overlaid, the nonwoven fabrics were wound while applying tension to the net sheet, and the area of overlap between the nonwoven fabrics and the reinforcing net sheet was 7112 cm²/10 inches. Finally, the end parts of the net sheet were thermally bonded so as to produce a filter main body. Table 1 shows the pressure loss for each of the nonwoven fabric layers used in Working Example 2-1. In addition, Table 3 shows the filter production conditions and the filter evaluation results for Working Example 2-1.

As Working Example 2-2, a filter main body was produced in the same manner as in Working Example 2-1, except that a small net sheet piece having a thickness of 0.8 mm and a mesh size of 12 mesh was used as the small net sheet piece and the area of overlap between the nonwoven fabric and the net sheet was 1016 cm²/10 inches. Table 3 shows the production conditions and filter evaluation results for Working Example 2-2.

As Working Example 2-3, a filter main body was produced in the same manner as in Working Example 2-1, except that a small net sheet piece having a thickness of 0.8 mm and a mesh size of 12 mesh was used as the small net sheet piece and the area of overlap between the nonwoven fabric and the small net sheet piece was 1524 cm²/10 inches. Table 3 shows the production conditions and filter evaluation results for Working Example 2-3.

As Working Example 2-4, a filter main body was produced in the same manner as in Working Example 2-1, except that a small net sheet piece having a thickness of 0.8 mm and a mesh size of 12 mesh was used as the small net sheet piece and the area of overlap between the nonwoven fabric and the small net sheet piece was 2032 cm²/10 inches. Table 3 shows the production conditions and filter evaluation results for Working Example 2-4.

As Comparative Example 2-1, a filter main body was produced in the same manner as in Working Example 2-1, except that a small net sheet piece was not used and the area of overlap between the nonwoven fabric and the net sheet was 0 cm²/10 inches. Table 3 shows the production conditions and filter evaluation results for Comparative Example 2-1.

The following matters were confirmed from the evaluation results in Table 3. In cases where the mesh size of the small net sheet piece was 12 mesh, if the area of overlap between the net and the nonwoven fabric layer was approximately 500 cm²/10 inches, the oil gram life retention rate was 80%. Furthermore, in cases where the area of overlap between the net and the nonwoven fabric layers was increased, it was possible to increase this retention rate to 90% or higher.

[Table 2]

**Table 2**

| Experiment 1 | Working Example 1-1 | Working Example 1-2 | Working Example 1-3 | Comparative Example 1-1 |
|---|---|---|---|---|
| (Production conditions) | | | | |
| Mesh size of net (mesh) | 12 | 7.5 | 6 | 4 |
| Thickness of net (mm) | 0.8 | 0.5 | 0.5 | 0.5 |
| Pressure loss pattern of nonwoven fabric | Gradient | Gradient | Gradient | Gradient |
| Area of net/nonwoven fabric overlap (cm²/10 inch) | 4064 | 7112 | 7112 | |
| Total area of nonwoven fabric (cm²) | 12192 | 12192 | 12192 | |
| Material (net) | PP | PP | PP | PP |
| Material (nonwoven fabric) | PP | PP | PP | PP |
| (Filter evaluation results) | | | | |
| Oil gram life (0 mins) (g/10 inch Ctg.) | 134 | 130 | 115 | 106.5 |
| Oil gram life (40 mins) (g/10 inch Ctg.) | 122.5 | 82 | 78 | 53 |
| Retention Rate (%) | 91.4 | 63.1 | 67.8 | 49.8 |
| Particle capturing and trapping performance (> 10 um) (%) | >99 | >99 | >99 | |

[Table 3]

**Table 3**

| Experiment 2 | Working Example 2-1 | Working Example 2-2 | Working Example 2-3 | Working Example 2-4 | Comparative Example 2-1 |
|---|---|---|---|---|---|
| (Production conditions) | | | | | |
| (Reinforcing net) | | | | | |
| Mesh size of net (mesh) | 4 | 4 | 4 | 4 | 4 |
| Thickness of net (mm) | 0.5 | 0.5 | 0.5 | 0.5 | 0.5 |
| Pressure loss pattern of nonwoven fabric | Gradient | Gradient | Gradient | Gradient | Gradient |
| Area of net/nonwoven fabric overlap (cm²/10inch) | 5080 | 5080 | 5080 | 5080 | 5080 |
| Total area of nonwoven fabric (cm²) | 7112 | 7112 | 7112 | 7112 | 7112 |
| Material (net) | PP | PP | PP | PP | PP |
| Material (nonwoven fabric) | PP | PP | PP | PP | PP |
| (Small net sheet piece having oil content capturing properties) | | | | | |
| Mesh size of net (mesh) | 12 | 12 | 12 | 12 | 12 |
| Thickness of net (mm) | 0.8 | 0.8 | 0.8 | 0.8 | 0.8 |
| Area of net/nonwoven fabric overlap (cm²/10inch) | 508 | 1016 | 1524 | 2032 | 0 |
| Total area of nonwoven fabric (cm²) | 12192 | 12192 | 12192 | 12192 | 12192 |
| Material (net) | PP | PP | PP | PP | PP |
| (Filter evaluation results) | | | | | |
| Oil gram life (0 mins) (g/10inch Ctg.) | 84.5 | 85 | 115 | 130 | 105 |
| Oil gram life (40 mins) (g/10inch Ctg.) | 70 | 75 | 105 | 125 | 49 |
| Retention rate (%) | 82.8 | 88.2 | 91.3 | 96.2 | 46.7 |
| Particle capturing and trapping performance (>10um) (%) | >99 | >99 | >99 | >99 | >99 |

## Claims

1. A tubular liquid-treating filter formed by winding a nonwoven fabric layer together with a reinforcing net sheet, wherein the reinforcing net sheet includes a net portion that exhibits oil content capturing properties through an interaction with the nonwoven fabric layer.

2. A tubular liquid-treating filter formed by winding a nonwoven fabric layer together with a reinforcing net sheet, wherein the reinforcing net sheet includes a portion having a mesh size in a range from 6 to 35 mesh and a thickness in a range from 0.3 to 2.0 mm.

3. A tubular liquid-treating filter formed by winding a nonwoven fabric layer with a reinforcing net sheet, wherein the filter also has a small net sheet piece that exhibits oil content capturing properties through an interaction with the nonwoven fabric layer.

4. A tubular liquid-treating filter formed by winding a nonwoven fabric layer with a reinforcing net sheet, wherein the filter also has a small net sheet piece and the small net sheet piece has a mesh size in a range from 6 to 35 mesh and a thickness in a range from 0.3 to 2.0 mm

5. The tubular liquid-treating filter described in any one of claims 1 to 4, wherein an area of overlap between the nonwoven fabric layer and either the net portion having oil content capturing properties in the net sheet or the net sheet portion having a mesh size in a range from 6 to 35 mesh and a thickness in a range from 0.3 to 2.0 mm is not less than 1 cm² and not more than a total area of the nonwoven fabric layer.

6. The tubular liquid-treating filter described in any one of claims 1 to 5, wherein an oil gram life of the filter, as measured with a filter evaluation method using hexane extraction of oil content in a liquid, is such that an evaluation value measured 40 minutes after a start of treatment is not more than 50% lower than an evaluation value at the start of treatment.

7. The tubular liquid-treating filter described in any one of claims 1 to 6, wherein the tubular liquid-treating filter is a tubular beverage liquid-treating filter.

8. A method for capturing and removing oil content in a liquid by using a tubular filter as described in any one of claims 1 to 7.

9. A method for producing a beverage liquid by using a tubular filter as described in any one of claims 1 to 7.

10. A method for measuring an oil gram life of a tubular filter as described in any one of claims 1 to 7 by using a hexane extraction process.
